(19) Europäisches Patentamt
European Patent Office
Office européen des brevets

(11) **EP 3 495 922 A1**

(12) **EUROPEAN PATENT APPLICATION**

(43) Date of publication:
**12.06.2019 Bulletin 2019/24**

(51) Int Cl.:
***G06F 3/01*** (2006.01)   ***G06F 3/0488*** (2013.01)
***G06F 3/0481*** (2013.01)

(21) Application number: **17306714.1**

(22) Date of filing: **06.12.2017**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**MA MD TN**

(71) Applicant: **THOMSON LICENSING
92130 Issy les Moulineaux (FR)**

(72) Inventors:
• **DANIEAU, Fabien
35576 CESSON SEVIGNE CEDEX (FR)**
• **COSTES, Antoine
35576 CESSON SEVIGNE CEDEX (FR)**
• **LECUYER, Anatole
78150 LE CHESNAY (FR)**
• **ARGELAGUET SANZ, Ferran
78150 LE CHESNAY (FR)**
• **GUILLOTEL, Philippe
35576 CESSON SEVIGNE CEDEX (FR)**

(74) Representative: **Vidon Brevets & Stratégie
16B, rue de Jouanet
BP 90333
35703 Rennes Cedex 7 (FR)**

(54) **A METHOD AND DEVICE FOR GENERATING PSEUDO-HAPTIC EFFECT**

(57)   Method and device for displaying an image on a touchscreen, texture information being associated with the image. To provide pseudo-haptic effects, a first information representative of a current location of a touch contact on the touchscreen is determined with a second information representative of a speed of displacement of the touch contact. A graphical object is generated with a shape and a trajectory determined according to the first information, the second information and a third information representative of at least one physical property associated with the texture information. The graphical object is then displayed with the image on the touchscreen.

Fig 1

## Description

### 1. Technical field

The present disclosure relates to visual feedback, in particular touching and rubbing a touch surface, for example when the touch surface is a touch screen such as in a tablet or a smartphone.

### 2. Background

This section is intended to introduce the reader to various aspects of art, which may be related to various aspects of the present disclosure that are described and/or claimed below. This discussion is believed to be helpful in providing the reader with background information to facilitate a better understanding of the various aspects of the present invention. Accordingly, it should be understood that these statements are to be read in this light, and not as admissions of prior art.

Tablets and smartphones allow users to use their sense of touch to interact with media content such as video and pictures. For example, a user may "feel" the texture or the roughness of an image when he/she is touching a device by the means of haptic effects such as vibrations generated by actuators embedded in the end-user devices or roughness variations using dedicated "smart surfaces" (see, for example, "Geometrical optimization of an ultrasonic tactile plate for surface texture rendering" by Peter Sergeant, Frédéric Giraud and Betty Lemaire-Semail in 2010). However, the custom hardware involved for rendering such a haptic effect make such devices difficult to widespread.

### 3. Summary

References in the specification to "one embodiment", "an embodiment", "an example embodiment", "a particular embodiment" indicate that the embodiment described may include a particular feature, structure, or characteristic, but every embodiment may not necessarily include the particular feature, structure, or characteristic. Moreover, such phrases are not necessarily referring to the same embodiment. Further, when a particular feature, structure, or characteristic is described in connection with an embodiment, it is submitted that it is within the knowledge of one skilled in the art to affect such feature, structure, or characteristic in connection with other embodiments whether or not explicitly described.

The present disclosure relates to a method of displaying an image on a touchscreen, texture information being associated with the image, the method comprising:

- determining a first information representative of a current location of a touch contact on the touchscreen and a second information representative of a speed of displacement of the touch contact;
- generating a graphical object having a shape and a trajectory determined according to the first information, the second information and a third information representative of at least one physical property associated with the texture information;
- displaying the graphical object with the image on the touchscreen.

The present disclosure relates to a device configured to display an image on a touchscreen, texture information being associated with the image, the device comprising:

- means for determining a first information representative of a current location of a touch contact on the touchscreen and a second information representative of a speed of displacement of the touch contact;
- means for generating a graphical object having a shape and a trajectory determined according to the first information, the second information and a third information representative of at least one physical property associated with the texture information;
- means for displaying the graphical object with the image on the touchscreen.

The present disclosure further relates to a device configured to display an image on a touchscreen, texture information being associated with the image, the device comprising:

- a processor configured to determine a first information representative of a current location of a touch contact on the touchscreen and a second information representative of a speed of displacement of the touch contact;
- a processor configured to generate a graphical object having a shape and a trajectory determined according to the first information, the second information and a third information representative of at least one physical property associated with the texture information;
- a display device configured to display the graphical object with the image.

According to a characteristic, the third information is retrieved from a location corresponding to said current location within one or more of the following maps:

- a stiffness map associated with the image;
- a height map associated with the image;
- a stickiness map associated with the image;
- a friction map associated with the image;
- a roughness map associated with the image.

According to a further characteristic, the third information is representative of at least two physical properties associated with the texture information.

According to another characteristic, determining the second information comprises:

- calculating a speed of displacement of the touch contact from the first information and an information representative of a location preceding the current location;
- applying a low-pass filter to the calculated speed to obtain the second information.

According to a further characteristic, determining the first information comprises:

- calculating a linear prediction of the current location from information representative of at least a location preceding the current location;
- applying a low-pass filter to a result of the linear prediction of the current location to obtain the first information.

The present disclosure also relates to a computer program product comprising instructions of program code for executing, by at least one processor, the abovementioned method of displaying an image, when the program is executed on a computer.

The present disclosure also relates to a (non-transitory) processor readable medium having stored therein instructions for causing a processor to perform at least the abovementioned method of displaying an image.

## 4. List of figures

The present disclosure will be better understood, and other specific features and advantages will emerge upon reading the following description, the description making reference to the annexed drawings wherein:

- figure 1 shows an example of an image comprising a graphical object displayed on a touchscreen device, according to a specific embodiment of the present principles;
- figure 2 shows a method of displaying the image of figure 1, according to a specific embodiment of the present principles;
- figures 3A to 3G each shows an example of the graphical object of figure 1, according to specific embodiments of the present principles;
- figure 4 shows an example of a process to generate the graphical object of figure 1, according to a specific embodiment of the present principles;
- figure 5 shows another example of a process to generate the graphical object of figure 1, according to a specific embodiment of the present principles;
- figure 6 diagrammatically shows a device implementing the method of figure 2 and/or the process of figure 4 and/or 5, according to a specific embodiment of the present principles.

## 5. Detailed description of embodiments

The subject matter is now described with reference to the drawings, wherein like reference numerals are used to refer to like elements throughout. In the following description, for purposes of explanation, numerous specific details are set forth in order to provide a thorough understanding of the subject matter. It can be evident, however, that subject matter embodiments can be practiced without these specific details.

The present description illustrates the principles of the present disclosure. It will thus be appreciated that those skilled in the art will be able to devise various arrangements that, although not explicitly described or shown herein, embody the principles of the disclosure.

According to non-limitative embodiments of the present disclosure, methods and device to generate, render and/or display a graphical object within an image are disclosed. The graphical object is intended to be displayed with the image on a screen that is associated with a touch interface, for example on the touchscreen of a tablet or a smartphone. One or more physical properties are associated with the texture of the image. The location of a touch contact on the touchscreen (e.g. a finger pressing the touchscreen) is determined with the associated speed of displacement of the touch contact. The shape and the trajectory of the graphical object are determined according to the determined location and speed of the touch contact and according to the one or more physical properties associated with the texture of the image displayed on the touchscreen when the touch contact occurs. The one or more properties are for example representative of the roughness of the texture and/or the hardness of the texture and/or friction of the texture. The generated graphical object may be displayed with the image on the touchscreen.

The displaying of a graphical object associated with the touch contact having a shape and a trajectory, which depend on the location and the speed of the touch contact on the touchscreen and on one or more physical properties associated with the texture of the image displayed on the touchscreen, enables a user touching the touchscreen to "feel" the texture of the displayed image with only visual cues, thus enhancing the user experience at low cost. Such an effect may be referred as a pseudo-haptic effect. Any device having a touchscreen and associated processing means is adapted to provide the feeling of a displayed texture without any further haptic rendering means. The pseudo-haptic effect obtained with the displaying of the graphical object enables to simulate a real interaction with the texture of the surface of the material represented with the texture.

As used herein, a "texture" is an image that is representative of an aspect of a surface of a material. The texture information may take the form of color information associated with the pixels of the image displayed on the touchscreen. The texture information may for example be stored under the form of grey levels associated with each channel of a color space (e.g. RGB color space or YUV color space), the grey level for each channel being for example expressed with a first determined number of bits, e.g. 8, 10 or 12 bits.

The touchscreen may comprise a touch surface coupled with a display screen, the touch surface may map the image displayed on the associated display screen. Touching this touch surface (e.g. with one or more fingers or stylus) at a point corresponds to touching the image (and associated texture) at a mapped point.

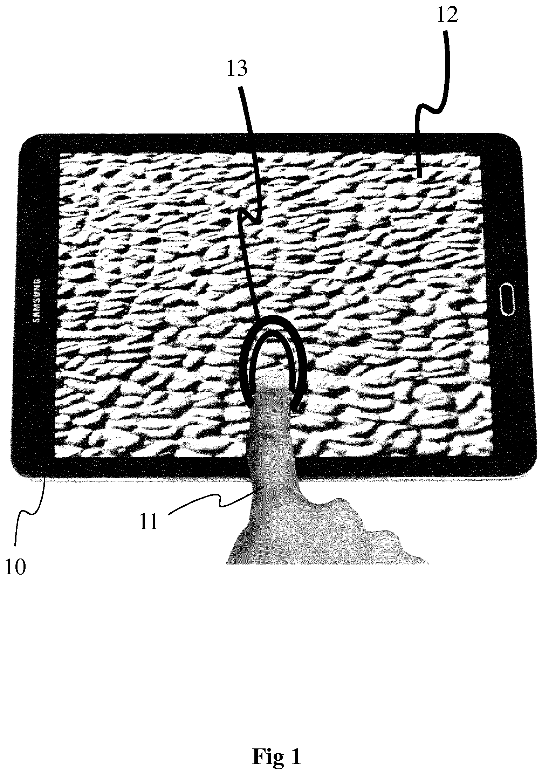

**Figure 1** shows an example of an image 12 displayed on a touchscreen 10, according to a non-restrictive embodiment of the present principles. The image 12 is representative of a textured material, i.e. texture information is associated with the pixels of the image, for example under the form of a value associated with each color channel of a color space (e.g. RGB or YUV). The representation of the textured material with the image 12 corresponds to a visual representation through the displaying of the image 12 on a display device (a screen) associated with a touch surface or interface of a tablet. A graphical object 13 is added to the image 12 at a location corresponding to a touch contact on the touchscreen 10, the touch contact being for example obtained with the touching of the touchscreen 10 with a finger 11 of the hand of a user. The shape and/or the trajectory of the displayed graphical object 13 are determined to provide the user with the illusion of feeling one or more physical properties (e.g. roughness, hardness and/or friction) associated with the textured material represented with the image 12, as if the user was really touching the material.

The touchscreen 10 may be for example part of a tablet, a smartphone or a laptop. The touchscreen may be for example composed of a resistive or a capacitive touch interface and of a LCD ("Liquid Crystal Display) or an OLED (Organic Light-Emitting Diode) display.

According to a variant, the touch contact may be performed with a stylus.

According to another variant, a plurality of touch contacts may be performed at a same time on the touchscreen 10 (e.g. with several fingers), one graphical object being generated and displayed for each touch contact or a single graphical object may be generated for two or more touch contacts (for example when the two or more contacts are close to each other).

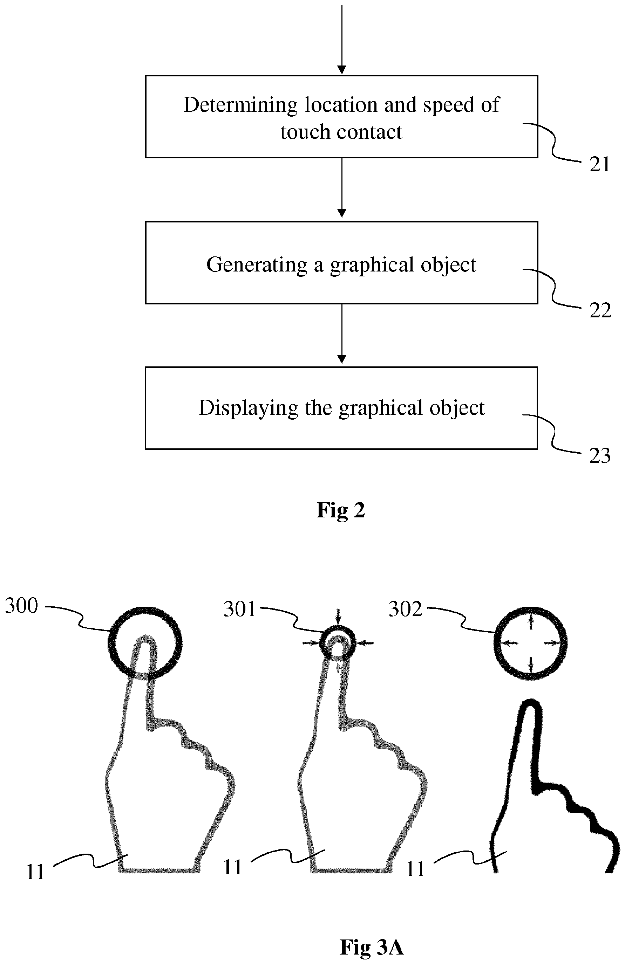

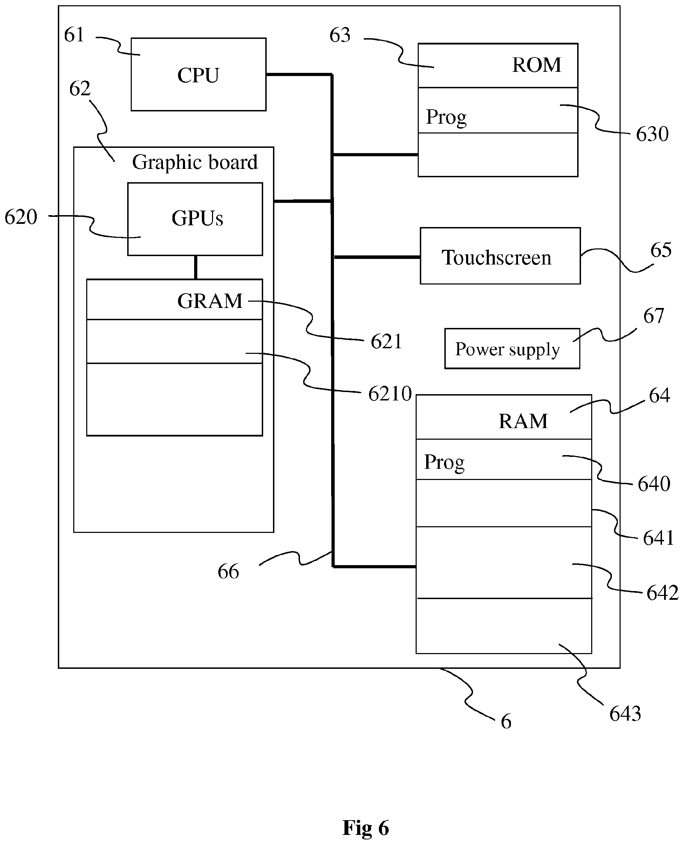

**Figure 2** shows an example of a method of displaying the image 12 on the touchscreen 10, according to a non-restrictive embodiment of the present principles. The method may for example be implemented in the device 6 of figure 6.

The different parameters of the device 6 may be first initialized, for example the different parameters used to display the image 12 and/or to generate the graphical object 13 may be initialized in any way.

In a first operation 21, a first information representative of a current location of a touch contact on the touchscreen is determined with a second information representative of a speed of displacement of the touch contact moving on the touchscreen. The displacement of the touch contact moving over the touchscreen may be measured and the speed of displacement may be computed by the controller and/or the processor controlling the touch surface of the touchscreen. The obtained second information (speed information) corresponds for example to a value expressed in $m.s^{-1}$ and associated with a time. When no displacement occurs, the value associated with the second information is equal to $0 \ m.s^{-1}$. The first information corresponds for example to the coordinates of the touch contact expressed in the space of the touchscreen. The first information may for example be expressed with row index and column index, the image 12 corresponding to an array of pixels arranged in rows and columns.

In a second operation 22, a graphical object associated with the touch contact is generated. The shape and/or the trajectory of the graphical object are determined according to the first information and the second information obtained at operation 21 and according to a third information representative of one or more physical properties associated with the texture information of the displayed image 12. Examples of graphical objects are given with regard to figures 3A to 3G described hereinbelow.

The third information may for example be metadata received with the image, the metadata comprising for example data (e.g. one or more bits) describing which type(s) of haptic effect(s) has to be rendered when touching the image. According to the textured material rendered with the image 12, one or more haptic effects may be associated, e.g. stiffness, roughness, stickiness, relief and/or friction. According to the haptic effect associated with the image 12, one or more models are implemented (with as inputs the first and the second information) to determine the shape and the trajectory of the graphical object, as it will be explained with more details in the following description.

According to another example, the third information may take the form of one or more maps associated with the image, each map being representative of a specific physical property associated with the texture information of the image 12. Each map may for example have the same resolution as the image 12, which enables to associate a physical property value (for example coded with 8, 10 or 12 bits) with each pixel of the image. According to a variant, the resolution of each map is less than the resolution of the image 12, a physical property value being associated with a group of collocated pixels of the image 12. The maps comprising the physical properties associated with the texture of the image 12 belongs to the following set of maps:

- a stiffness map comprising values representative of the rigidity of the textured material represented with the image 12, i.e. the extent to which the material resists to deformation in response to an applied force (e.g. the force resulting from the touch contact when pressing the touchscreen);
- a roughness map comprising values representative of the surface roughness of the textured material represented with the image 12, the roughness corresponding for example to the average spatial period of the microscopic reliefs on the texture.
- a stickiness map comprising values representative of static friction coefficient of the textured material represented with the image 12, i.e. the maximum value of the ratio between the tangential force and the normal at the contact point with the texture before the two contacting objects get moving relative to each other. When the ratio is smaller, the static friction force is opposed and equal to the tangential force, thereby cancelling the movement.
- a relief map, also called height map comprising values representative of surface elevation; and
- a friction map comprising values representative of kinetic friction coefficient of the textured material represented with the image 12, i.e. the ratio between the friction force and the normal at the contact point when an object slides on the texture. The friction force is in the direction opposed to sliding velocity and has a damping effect on the movement.

According to a variant, only one map is associated with the image, the single map comprising for each pixel of the map a set of different values, each value being representative of a specific physical property. For example, a different value (of a specific physical property) may be associated with each channel of the map (for example 4 channels may be associated with each pixel, e.g. like for RGB$\alpha$ maps, RGB corresponding to the 3 color channels and $\alpha$ to the transparency information channel and being used to transport the values of the different physical properties).

The use of one or more maps to store the third information enables to retrieve the value for each physical property associated with the texture associated with the location of the touch contact. Knowing the location of the touch contact (via the first information), the corresponding location in the one or more maps is easily determined and the corresponding value(s) is (are) retrieved. The retrieved value(s) may then be used in the one or more models used to determine the shape and/or the trajectory of the graphical object, as explained with more details in the following description.

The image 12 and associated metadata or associated map(s) may for example be received from a remote storage device (e.g. a server), either with wired or wireless transmission. According to another example, the image 12 and associated metadata or associated map(s) are stored in a local memory or storage device of the device comprising the touchscreen.

In a third operation 23, the graphical object obtained at operation 22 is added, for example overlaid, to the image 12 and displayed with the image 12. The graphical object 23 may be seen as a cursor following the touch contact, i.e. the graphical object may be embedded into the image 12 at the location of the touch contact, using for example the first information.

The image 12 may be one image of a sequence of temporally successive images and the operations 21 to 23 may be reiterated for a plurality of images of the sequence.

According to a further example, two or more touch contacts may occur at a same time. According to this example, one graphical object may be generated and displayed for each detected touch contact. When two touch contacts are close from each other (for example when the distance between the two touch contacts is less than a determined distance value or when the graphical objects (associated with each touch contact) contact each other, i.e. they would share one or more pixels if displayed independently), the graphical objects associated with each of the touch contacts may be merged to from one single graphical object.

Such a method enables to enhance touchscreen interactions with pseudo-haptic effects able to evoke a variety of haptic features without the need of any mechanical actuator. When the user touches the screen, a cursor or graphical object appears under the finger (or the stylus) and follows it as the finger strokes the screen, before disappearing on release. The graphical object may for example be a double white circle about two times larger than the finger. As the finger hovers an area with haptic content, the motion and shape of the graphical object are altered in order to express the relevant haptic properties. For instance, the graphical object might vibrate according to roughness, or may be deformed according to stickiness.

Simple physical models may be considered that would take one of the physical properties (as well as finger position and/or speed) as an input and a change in shape or motion as an output (for instance, vibrations depending on roughness and speed).

**Figures 3A to 3G** each shows an example of the graphical object, according to non-restrictive embodiments of the present principles.

**Figure 3A** illustrates a compress effect that simulate hardness/softness of the textured material, with shrinking over time. The simulated physical property of the displayed textured material relates to elasticity, stiffness, softness, i.e. the relationship between pressure and deformation. The simulated pressure grows with time until a limit value, and decrease in the same way on release. To provide the illusion of pressure and deformation, a graphical object 300 is displayed with an original shape (e.g. a circle) at a first time t0 when the user touches the touchscreen with his/her finger 11, the time of which decreasing with time. At a time t1 greater than t0, the graphical object 301 is displayed with a reduced size. Then, when the user stops to touch the touchscreen at a time t2 greater than t1, the size of the graphical object 302 increases, for example until being equal to the size of the original shape 300. On touch, the graphical object appears with an initial size 300 and immediately shrinks progressively to reach a target size 301. On release, the graphical object comes back to its initial size 302 before vanishing. The stiffness is represented by the ratio between target and initial sizes. The hardness may be simulated by the maximal deformation applied to the graphical object. A physical model used to obtain the deformation may be the Hooke's law for example. With such a model, a progressive compress effect is obtained until reaching a maximal value.

The Compress effect simulates texture's stiffness K by representing its deformation over time. The stiffness model takes a value of K and a pushing force F as an input and gives a deformation X as an output.

For instance, with the linear Hooke's law: $X = F/K$; or with an exponential law: $X = \ln(F/K + 1)$.

F is supposed to be constant, X is expressed by the modification of the size of the graphical object and K is expressed by the maximum deformation. The touch down and release events set the pushing force respectively to a positive value and a zero value, resulting respectively in a compression and a dilation over time.

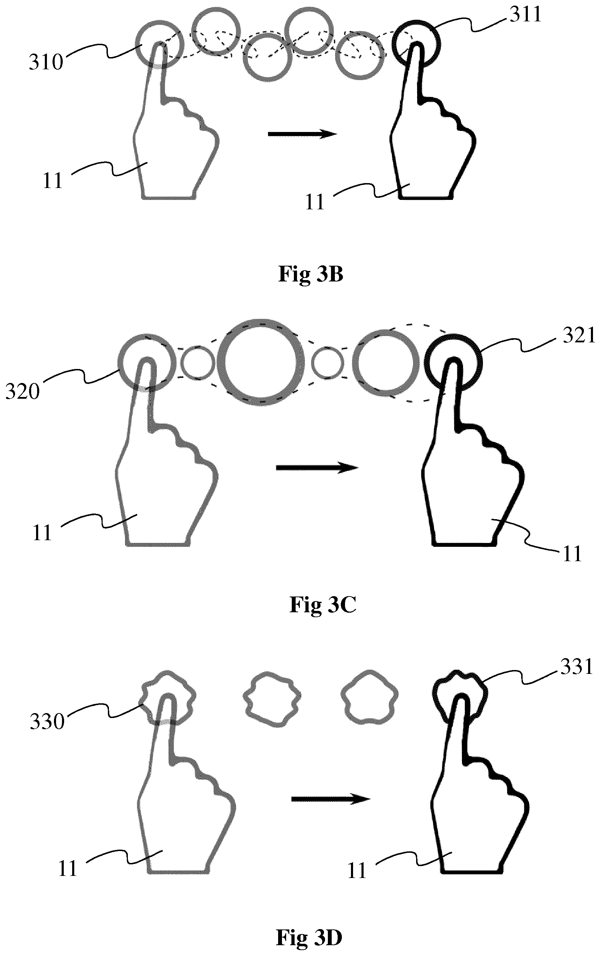

**Figure 3B** illustrates a displace effect and **Figure 3C** illustrates a dilate effect, both simulating fine roughness property of the textured material.

Fine roughness is about high frequency geometrical features of the textures material surface, that are too small to be perceived with static contact. When stroking a surface, the vibrations occurring under the finger are the most salient and effective information to evaluate its fine roughness. These vibrations are known to be correlated to user's finger pressure and speed, however only speed responsiveness was found to be necessary for perceptual realism. If the stroked material features a spatial period, it clearly dominates the vibratory spectrum, although the involved physics are still far from being understood in detail.

These vibrations may be represented, as a first approximation, by a single-frequency vibration with a modulation of amplitude and/or frequency according to the speed of the touch contact. For sake of simplicity, touch contact displacement may be used as phase, multiplied by the wavenumber corresponding to the simulated roughness.

The dilate effect illustrated with Figure 3C apply this oscillation to the size of the graphical object. When the user strokes the touchscreen, the graphical object oscillates in size, from an original size 320 at time t0 to a final size 321 at time $t_{final}$ (that may be the same as the original size), the size of the graphical object decreasing and increasing over time from the original size 320 to the final size 321. The dilate effect evokes fine roughness with size vibrations.

The Dilate effect simulates texture's roughness r by representing the vibrations produced by a stroke on it. The roughness model is an oscillation weighted by stroke speed x'. The size S of the graphical object may be modified from its base value So by a high frequency component:

$$S = So + x' * \sin(r * pi * x)$$

The displace effect of figure 3B, in contrast, apply roughness vibration to position. An 2D oscillatory offset is added to the graphical object position to create a visual vibration under the finger 11. The chosen pattern induces an offset between the two axes in order to be hardly identifiable by the user. It may for example be given by f: x → [sin(ω ∗ x),sin(0.8 ∗ ω ∗ x)] where x is finger displacement and ω is the wavenumber. The trajectory between the original position 310 and the final position 311 is illustrated with doted line. The displace effect evokes fine roughness with motion vibrations. The shape of the graphical object does not change over time, the size of the shape being for example the same along the trajectory.

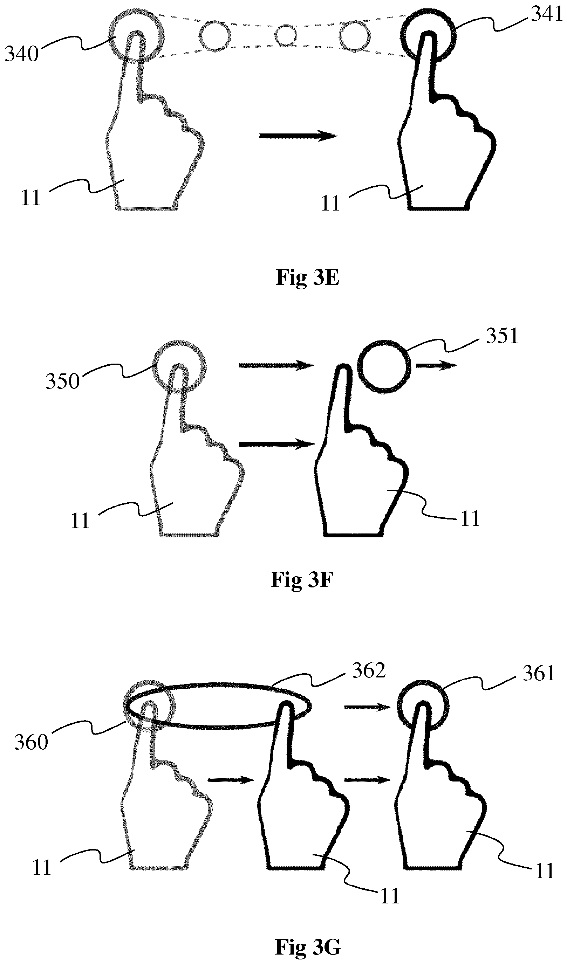

**Figure 3D** illustrates an encase effect and **Figure 3E** illustrates a size effect, both simulating macro roughness property of the textured material.

Macro roughness relates low frequency reliefs. A relief map may be used to store the macro roughness information. A relief map corresponds for example to a monochrome image that gives, for any relative position on the textured image 12, the corresponding relief height.

The size effect of Figure 3E simulates a simple perspective effect by magnifying and diminishing the size of the graphical object proportionally to relief height on touch contact point. Figure 3E illustrates the displacement of touch contact (i.e. the finger 11 according to the example of Figure 3E) and the size variation of the graphical object from an initial size 340 to a final size 341. The size effect evokes macro roughness with size change of the graphical object.

The Size effect simulate texture's local relief height h by changing the size of the graphical object to simulate a perspective change. The relief model is inspired on perspective laws where the size of an object in the visual field is proportional to distance, although the ratio may be much higher to make small change in height visible. The size S of the graphical object may be modified from its base value So by a low frequency component in a maximum range [-ds;ds] according to h:

$$S = So + h * ds, \text{ h being normalized between -1 et 1.}$$

h being normalized between -1 et 1.

The Encase effect of Figure 3D, in contrast, takes the area covered by the graphical object, reads the values corresponding this whole area in the relief map, and changes the shape of the graphical object to reproduce the reliefs around the touch contact (i.e. the finger 11 according to the example of Figure 3D) position. Figure 3D illustrates the shape variation along the displacement from an initial shape 330 to a final shape 331. The encase effect evokes macro roughness with shape change of the graphical object.

**Figure 3F** illustrates a slide effect and **Figure 3G** illustrates a stick effect, both simulating friction property of the textured material.

The Friction property relates mainly to stickiness/slipperiness, and dryness/wetness, although being also correlated with fine roughness. Understanding the physics of friction phenomenon is still an active research topic, as their important number of parameters and non-linearities make them tricky to model in an accurate way. However, some simplistic models like the Coulomb's law have been useful in mechanical engineering for centuries.

The Stick effect of Figure 3G simulates dry friction, for example according to the Coulomb's law. It reproduces the two regimes of the well-known stick-slip phenomenon. In the sticking regime, the graphical object stretches as if one of its extremity was fixed to the start position 360, while the other one 362 follows the finger. When a given amount of deformation is reached, the effect enters to the sliding regime where the graphical object 361 just follows the finger 11 without any alteration. The effect switches back to the sticking regime when the finger velocity drops below a determined speed. The stickiness is represented by the deformation limit between the sticking regime and the sliding regime. The stick effect evokes stickiness with static deformation.

The Stick model simulates texture's static friction coefficient f by grounding one edge of the cursor on start position and stretching it according to finger's movements. The friction model is the Coulomb's law: the friction force F opposes and cancels the tangential force T as long as it is inferior to the normal force F multiplied by f: F = -T if T < fN.

T and its variations are represented by the stretching of the graphical object due to the distance between start position and actual position. When this distance comes above a determined value, the effect stops deforming the graphical object to represent the transition from static friction to sliding.

The Slide effect of Figure 3F simulates fluid friction and induces a difference between the finger speed and the graphical object speed. The graphical object 350 is accelerated proportionally to finger's speed, as long as they are in contact. It is also decelerated by a viscosity force opposed and proportional to its speed. The slipperiness is represented by the C/D ratio between finger speed and graphical object acceleration. To handle with decoupling issues, the graphical object is accelerated by the finger only if they are in contact, which is not intended to last long. Once they are separated, the finger 11 does not act anymore on the graphical object 351. However, as soon as the user releases and touches the touchscreen again, the graphical object is displayed back under the finger 11. Thus, the decoupling sensation remains limited.

The Slide effect simulate texture's kinetic friction c by the modification of the trajectory of the graphical object.

The friction model is an inertial trajectory model with a unit mass and two forces: a pushing force P that is given by finger speed vf on screen, and a damping force opposed and proportional to the speed vc of the graphical object: x" = vf - c * vc.

The acceleration x" may be integrated two times with a Euler scheme to obtain the trajectory.

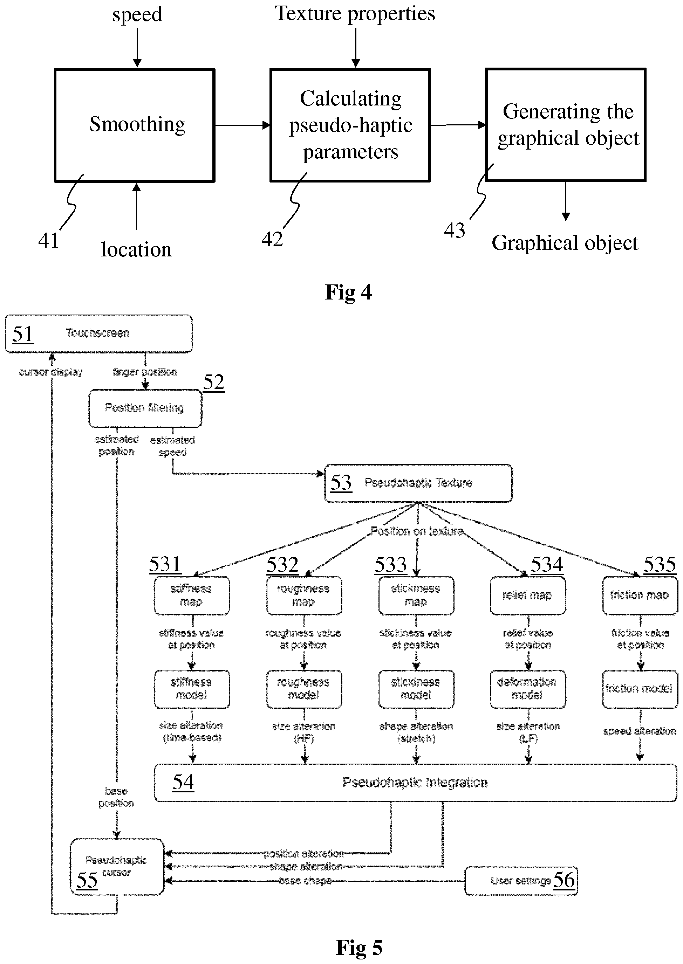

**Figure 4** shows a first example of a process to generate the graphical object 13, according to a specific embodiment of the present principles.

In a first operation 41, a corrected location of the touch contact and an estimated speed of the touch contact are determined from the raw speed and location provided by the touchscreen and associated controller. The speed may be determined from a current position of the graphical object and from the position temporally preceding the current position. The obtained speed may be smoothed by applying a low-pass filter to smooth the quantization peaks. A linear prediction of the location of the touch contact is calculated and a low-pass filter is applied to the result of the linear prediction, which enables to take into account the latency of the raw location obtained from the touchscreen and associated controller. It enables to obtain the predicted location of the finger for displaying the graphical object under the touch contact.

In a second operation 42, the corrected location and smoothed seed are applied to one or more physical models (e.g. stiffness model, roughness model, stickiness model, deformation model and/or friction model) to obtain a shape (e.g. size of a determined shape model) and/or a trajectory, depending on the one or more physical properties associated with the texture information of the image 12 displayed on the touchscreen during the touch contact. The one or more properties may be global properties (e.g. a same value for the whole image 12) or local properties (e.g. values that depend from the location of the touch contact). The one or more physical properties may be obtained from metadata associated with the displayed image or from one ore more property maps. One or more pseudo-haptic parameters (parameters representative of the trajectory and/or of the size variation) to be applied to the graphical object are obtained from the corrected speed and location and from the one or more physical properties.

In a third operation 43, the pseudo-haptic parameters obtained at operation 42 are applied to a model of the graphical object (for example a default shape or a user-determined shape) to generate the graphical object (with size variation and/or specific trajectory) to reproduce the desired pseudo-haptic effect.

**Figure 5** shows a second example of a process to generate the graphical object 13, according to a specific embodiment of the present principles.

In a first operation 51, the raw touch contact location is detected by the touchscreen and associated controller. For instance, the user might be swiping, therefore in a position close to previous position, with an offset according to its speed.

In a second operation 52, the corrected location of the touch contact and the contact speed are calculated. A linear prediction of the location of the touch contact is calculated and a low-pass filter is applied to the result of the linear prediction, which enables to take into account the latency of the raw location obtained from the touchscreen and associated controller. It enables to obtain the predicted location of the finger for displaying the graphical object under the touch contact. The speed may be determined from the difference between current and previous position and may be smoothed by applying a low-pass filter to smooth the quantization peaks.

In a third operation 53, the current position and speed are transmitted to the pseudo-haptic texture to compute the correction of the position and shape of the graphical object according to its haptic properties: stiffness, roughness, relief, friction, and/or stickiness. The pseudo-haptic texture corresponds to a set comprising the image representative of the textured material and the associated maps (stiffness map, roughness map, relief map, friction map and stickiness map). The effects of the five haptic properties are calculated separately in operations 531, 532, 533, 534 and 535. For each of these operations the value of the haptic property is retrieved by reading the corresponding map at current position, then the corresponding model is applied to get either, respectively, a time-based size correction, a high-frequency size correction, a low-frequency size correction, a speed alteration and a shape correction. For example, the stiffness model might result with no size correction because the maximum pressure deformation has already been reached; the roughness model might give a size correction to pursue size oscillations due to a rough area; the relief model might give a small size increase because the touch location enters a bump; the friction model might give a small step back in order to slow down the cursor trajectory; and the stickiness model might give no correction because it has already reached maximum deformation in the past. These five contributions may be merged into a position correction and a shape correction in a fourth operation 54.

According to a variant, only a part of the five haptic properties mentioned hereinabove are calculated, for example only one of the five haptic properties or two or three or four of the five haptic properties.

In a fifth operation 55, the position and shape corrections are applied to the graphical object, with respect to its base shape (that may be provided by user settings defined by operation 56) and the touch location calculated at operation 52. Finally, the graphical object is displayed to the user on the display device of the touchscreen. According to a variant, the base shape is a determined shape that is predefined without input from the user.

**Figure 6** shows a hardware embodiment of an apparatus 6 configured to implement the method of figure 2, the process of figure 4 and/or the process of figure 5. According to this example, the device 6 comprises the following elements, connected to each other by a bus 66 of addresses and data that also transports a clock signal:

- a microprocessor 61 (or CPU),
- a graphics card 62 comprising:

  • several Graphical Processor Units (or GPUs) 620,
  • a Graphical Random-Access Memory (GRAM) 621,

- a non-volatile memory of ROM (Read Only Memory) type 63,
- a Random Access Memory or RAM 64,
- a touchscreen 65 including a display device and other I/O (Input/Output) devices such as for example a mouse, a webcam, etc. that are not represented on Figure 6, and
- a power source 67.

It is noted that the word "register" used in the description of memories 621, 63 and 64 designates in each of the memories mentioned, both a memory zone of low capacity (some binary data) as well as a memory zone of large capacity (enabling a whole program to be stored or all or part of the data representative of data calculated or to be displayed).

When switched-on, the microprocessor 61 loads and executes the instructions of the program contained in the RAM 64.

The random-access memory 64 notably comprises:

- in a register 640, the operating program of the microprocessor 61 responsible for switching on the device 60,
- data 641 representative of the physical models,
- data 642 representative of the graphical object,
- data 543 representative of the touch contact,

According to a specific embodiment, the algorithms implementing the steps of the method specific to the present disclosure and described hereafter are advantageously stored in the memory GRAM 621 of the graphics card 62 associated with the device 60 implementing these steps. When switched on and once the data 641, 642 and 643 are loaded into the RAM 63, the graphic processors 620 of the graphics card 62 load these parameters into the GRAM 621 and execute the instructions of these algorithms in the form of microprograms of "shader" type using HLSL (High Level Shader Language) language or GLSL (OpenGL Shading Language) for example.

The random-access memory GRAM 621 notably comprises data representative of an image representative of the textured material distorted by a contact in a register 6210.

According to another variant, a part of the RAM 63 is assigned by the CPU 61 for storage of the algorithms. This variant however causes greater latency time in the composition of an image as the data must be transmitted from the random-access memory 63 to the graphics card 62 passing by the bus 66 for which the transmission capacities are generally inferior to those available in the graphics card for transmission of data from the GPUs to the GRAM and vice-versa.

According to another variant, the power supply 67 is external to the device 6.

Naturally, the present disclosure is not limited to the embodiments previously described.

In particular, the present disclosure is not limited to a method of displaying an image on a touchscreen but extends to a method for generating and rendering the graphical object(s) associated with the one or more touch contacts. The implementation of calculations necessary to compose said image is not limited either to an implementation in shader type microprograms but also extends to an implementation in any program type, for example programs that can be executed by a CPU type microprocessor. The use of the methods of the present disclosure is not limited to a live utilisation but also extends to any other utilisation, for example for processing known as postproduction processing in a recording studio.

The implementations described herein may be implemented in, for example, a method or a process, an apparatus, a software program, a data stream, or a signal. Even if only discussed in the context of a single form of implementation (for example, discussed only as a method or a device), the implementation of features discussed may also be implemented in other forms (for example a program). An apparatus may be implemented in, for example, appropriate hardware, software, and firmware. The methods may be implemented in, for example, an apparatus such as, for example, a processor, which refers to processing devices in general, including, for example, a computer, a microprocessor, an integrated circuit, or a programmable logic device. Processors also include communication devices, such as, for example, smartphones, tablets, computers, mobile phones, portable/personal digital assistants ("PDAs"), and other devices.

Implementations of the various processes and features described herein may be embodied in a variety of different equipment or applications, particularly, for example, equipment or applications associated with data encoding, data decoding, view generation, texture processing, and other processing of images and related texture information and/or depth information. Examples of such equipment include an encoder, a decoder, a post-processor processing output from a decoder, a pre-processor providing input to an encoder, a video coder, a video decoder, a video codec, a web server, a set-top box, a laptop, a personal computer, a cell phone, a PDA, and other communication devices. As should be clear, the equipment may be mobile and even installed in a mobile vehicle.

Additionally, the methods may be implemented by instructions being performed by a processor, and such instructions (and/or data values produced by an implementation) may be stored on a processor-readable medium such as, for example, an integrated circuit, a software carrier or other storage device such as, for example, a hard disk, a compact diskette ("CD"), an optical disc (such as, for example, a DVD, often referred to as a digital versatile disc or a digital video disc), a random access memory ("RAM"), or a read-only memory ("ROM"). The instructions may form an application program tangibly embodied on a processor-readable medium. Instructions may be, for example, in hardware, firmware, software, or a combination. Instructions may be found in, for example, an operating system, a separate application, or a combination of the two. A processor may be characterized, therefore, as, for example, both a device configured to carry out a process and a device that includes a processor-readable medium (such as a storage device) having instructions for carrying out a process. Further, a processor-readable medium may store, in addition to or in lieu of instructions, data values produced by an implementation.

As will be evident to one of skill in the art, implementations may produce a variety of signals formatted to carry information that may be, for example, stored or transmitted. The information may include, for example, instructions for performing a method, or data produced by one of the described implementations. For example, a signal may be formatted to carry as data the rules for writing or reading the syntax of a described embodiment, or to carry as data the actual syntax-values written by a described embodiment. Such a signal may be formatted, for example, as an electromagnetic wave (for example, using a radio frequency portion of spectrum) or as a baseband signal. The formatting may include, for example, encoding a data stream and modulating a carrier with the encoded data stream. The information that the signal carries may be, for example, analog or digital information. The signal may be transmitted over a variety of different wired or wireless links, as is known. The signal may be stored on a processor-readable medium.

A number of implementations have been described. Nevertheless, it will be understood that various modifications may be made. For example, elements of different implementations may be combined, supplemented, modified, or removed to produce other implementations. Additionally, one of ordinary skill will understand that other structures and processes may be substituted for those disclosed and the resulting implementations will perform at least substantially the same function(s), in at least substantially the same way(s), to achieve at least substantially the same result(s) as the implementations disclosed. Accordingly, these and other implementations are contemplated by this application.

**Claims**

1.  A method of displaying an image (12) on a touchscreen (10), texture information being associated with said image, the method comprising:

    - determining (21) a first information representative of a current location of a touch contact on said touchscreen (10) and a second information representative of a speed of displacement of said touch contact;
    - generating (22) a graphical object (13) having a shape and a trajectory determined according to said first information, said second information and a third information representative of at least one physical property associated with said texture information;
    - displaying (23) said graphical object (13) with said image (12) on the touchscreen.

2.  The method according to claim 1, wherein said third information is retrieved from a location corresponding to said current location within one or more of the following maps:

    - a stiffness map (531) associated with said image;
    - a height map (534) associated with said image;
    - a stickiness map (533) associated with said image;
    - a friction map (535) associated with said image;
    - a roughness map (532) associated with said image.

3.  The method according to claim 1 or 2, wherein said third information is representative of at least two physical properties associated with said texture information.

4.  The method according to one of claims 1 to 3, wherein determining the second information comprises:

- calculating a speed of displacement of said touch contact from said first information and an information representative of a location preceding said current location;
- applying a low-pass filter to said calculated speed to obtain said second information.

5. The method according to one of claims 1 to 4, wherein determining the first information comprises:

- calculating a linear prediction of said current location from information representative of at least a location preceding said current location;
- applying a low-pass filter to a result of said linear prediction of said current location to obtain said first information.

6. A device configured to display an image on a touchscreen, texture information being associated with said image, the device comprising:

- means for determining a first information representative of a current location of a touch contact on said touchscreen and a second information representative of a speed of displacement of said touch contact;
- means for generating a graphical object having a shape and a trajectory determined according to said first information, said second information and a third information representative of at least one physical property associated with said texture information;
- means for displaying said graphical object with said image on the touchscreen.

7. The device according to claim 6, further comprising means for retrieving said third information from a location corresponding to said current location within one or more of the following maps:

- a stiffness map associated with said image;
- a height map associated with said image;
- a stickiness map associated with said image;
- a friction map associated with said image;
- a roughness map associated with said image.

8. The device according to claim 6 or 7, wherein said third information is representative of at least two physical properties associated with said texture information.

9. The device according to one of claims 6 to 8, wherein said means for determining the second information comprise:

- means for calculating a speed of displacement of said touch contact from said first information and an information representative of a location preceding said current location;
- means for applying a low-pass filter to said calculated speed to obtain said second information.

10. The device according to one of claims 6 to 9, wherein said means for determining the first information comprise:

- means for calculating a linear prediction of said current location from information representative of at least a location preceding said current location;
- means for applying a low-pass filter to a result of said linear prediction of said current location to obtain said first information.

11. A computer program product comprising instructions of program code for executing steps of the method according to one of claims 1 to 5, when said program is executed on a computer.

12. A non-transitory processor readable medium having stored therein instructions for causing a processor to perform the method according to one of claims 1 to 5.

**Fig 1**

Determining location and speed of
touch contact

21

Generating a graphical object

22

Displaying the graphical object

23

**Fig 2**

300    301    302

11      11      11

**Fig 3A**

**Fig 3B**

**Fig 3C**

**Fig 3D**

**Fig 3E**

**Fig 3F**

**Fig 3G**

speed               Texture properties

| Smoothing | → | Calculating pseudo-haptic parameters | → | Generating the graphical object |

41    location         42            43   Graphical object

**Fig 4**

51 Touchscreen

cursor display    finger position

52 Position filtering

estimated position   estimated speed

53 Pseudohaptic Texture

Position on texture

| 531 | 532 | 533 | 534 | 535 |
| stiffness map | roughness map | stickiness map | relief map | friction map |
| stiffness value at position | roughness value at position | stickiness value at position | relief value at position | friction value at position |
| stiffness model | roughness model | stickiness model | deformation model | friction model |
| size alteration (time-based) | size alteration (HF) | shape alteration (stretch) | size alteration (LF) | speed alteration |

54 Pseudohaptic Integration

base position

55 Pseudohaptic cursor

position alteration
shape alteration
base shape      User settings 56

**Fig 5**

61 CPU

62 Graphic board

620 GPUs

GRAM

621

6210

66

63 ROM

Prog

630

Touchscreen

65

Power supply

67

RAM

64

Prog

640

641

642

6

643

**Fig 6**

Europäisches
Patentamt

European
Patent Office

Office européen
des brevets

## EUROPEAN SEARCH REPORT

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | US 2017/269691 A1 (FLEUREAU JULIEN [FR] ET AL) 21 September 2017 (2017-09-21) * paragraph [0063] - paragraph [0074]; figures 4-6 * | 1-12 | INV. G06F3/01 G06F3/0488 G06F3/0481 |
| Y | ANATOLE LÉCUYER ET AL: "A study of the modification of the speed and size of the cursor for simulating pseudo-haptic bumps and holes", ACM TRANSACTIONS ON APPLIED PERCEPTION, ASSOCIATION FOR COMPUTING MACHINERY, INC, NEW YORK, NY, US, vol. 5, no. 3, 12 September 2008 (2008-09-12), pages 1-21, XP058303512, ISSN: 1544-3558, DOI: 10.1145/1402236.1402238 * abstract * * Sections 1, 2.3 - 3.2, 5, 6 * | 1-12 | |

TECHNICAL FIELDS
SEARCHED      (IPC)

G06F

The present search report has been drawn up for all claims

| Place of search | Date of completion of the search | Examiner |
|---|---|---|
| Munich | 31 January 2018 | Tonet, Oliver |

CATEGORY OF CITED DOCUMENTS

X : particularly relevant if taken alone
Y : particularly relevant if combined with another
     document of the same category
A : technological background
O : non-written disclosure
P : intermediate document

T : theory or principle underlying the invention
E : earlier patent document, but published on, or
     after the filing date
D : document cited in the application
L : document cited for other reasons

& : member of the same patent family, corresponding
     document

EPO FORM 1503 03.82 (P04C01)

## ANNEX TO THE EUROPEAN SEARCH REPORT
## ON EUROPEAN PATENT APPLICATION NO.

EP 17 30 6714

This annex lists the patent family members relating to the patent documents cited in the above-mentioned European search report.
The members are as contained in the European Patent Office EDP file on
The European Patent Office is in no way liable for these particulars which are merely given for the purpose of information.

31-01-2018

| Patent document cited in search report | Publication date | Patent family member(s) | Publication date |
|---|---|---|---|
| US 2017269691 A1 | 21-09-2017 | CN 107003106 A<br>EP 3227631 A1<br>JP 2018501558 A<br>KR 20170091613 A<br>US 2017269691 A1<br>WO 2016087278 A1 | 01-08-2017<br>11-10-2017<br>18-01-2018<br>09-08-2017<br>21-09-2017<br>09-06-2016 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **PETER SERGEANT ; FRÉDÉRIC GIRAUD ; BETTY LEMAIRE-SEMAIL.** *Geometrical optimization of an ultrasonic tactile plate for surface texture rendering,* 2010